# EUROPEAN PATENT APPLICATION

(11) **EP 3 388 679 A1**
(43) Date of publication of application: **17.10.2018**
(21) Application number: 17166348.7
(22) Date of filing: 12.04.2017
(51) Int. Cl.: F04D 9/00, F04D 9/04, F04D 13/02, F04D 29/044, F04D 29/60, F04D 29/62, F04D 29/64, F16D 11/14, F16D 1/10

(54) **PUMP AND METHOD OF INSERTING OR REMOVING AN ENDLESS FLEXIBLE MECHANICAL ELEMENT FROM A PUMP**

(71) Applicant: Xylem IP Management S.à.r.l., 1259 Senningerberg (LU)
(72) Inventor: HANSELMAN, Malcolm, County Durham, Durham DH3 3ET (GB); FLORENCE, John, Fairford, Gloucestershire GL7 4PR (GB); TURNER, Jonathan, Cirencester, Gloucestershire GL7 1YN (GB); WEAVEN, Ralf, Cirencester, Gloucestershire GL7 5LP (GB)
(74) Representative: Scott, Mark Andrew

(57) **Abstract**

A pump for pumping fluid comprises a pump housing which comprises a fluid inlet, a fluid outlet, a pumping chamber fluidly connected to the fluid inlet and the fluid outlet. Within the pumping chamber is provided a rotatable impeller for drawing fluid from the inlet and displacing the fluid out of the fluid outlet. The pump also comprises a drive source adapted to generate a drive force for rotating the impeller; a drivetrain assembly coupling the drive source to the impeller so as to transmit the drive force to the impeller, wherein the drivetrain assembly comprises a rotatable element arranged between the drive source and the impeller so as to transmit the drive force. The pump also includes an an ancillary device comprising a rotatable input element and the rotatable element of the drivetrain assembly is arranged such that it can be coupled to the rotatable input element of the ancillary device by an endless flexible mechanical element and thereby drive the rotatable input element when coupled by an endless flexible mechanical element. Additionally, the drive source, the drivetrain assembly and the impeller define a plurality of transmission elements and a pair of the transmission elements are spaced apart. The drivetrain assembly also comprises a moveable connecting element for coupling the spaced apart transmission elements, the moveable connecting element being moveable between: a first position in which the spaced apart transmission elements are coupled so as to enable the drive force to be transmitted from the drive source to the impeller; and a second position in which a gap is formed for allowing an endless flexible mechanical element to be threaded between the spaced apart transmission elements to allow the endless flexible mechanical element to couple the rotatable element and the rotatable input element of the ancillary device.

## Description

### Field of the invention

The invention relates to pumps for pumping fluid. In particular, the invention relates to pumps comprising a drive source, an impeller and a drivetrain assembly for transmitting a drive force produced by the drive source to the impeller. An ancillary device is provided which can be coupled to a rotatable element of the drivetrain assembly by means of an endless flexible mechanical element.

### Background of the invention

Pumps are well known and are used for a wide variety of reasons, including for the pumping of fluids, such as water or oil, or mixtures of fluids and solids, such as waste water. One example of a pump is a centrifugal pump, the main components of which comprise a means for generating drive force (for example a diesel- or electric-powered motor), an impeller located in a pumping chamber and a drivetrain. The drivetrain serves to transmit the drive force from the drive generating means to the impeller such that the impeller can rotate within the pumping chamber and thereby draw fluid into the chamber from a pump inlet and expels it through a pump outlet.

In many cases, very large volumes of fluid will be pumped over the lifetime of the pump, during which time some parts of the pump may require servicing or replacement. This may require disassembly of the pump and replacement of some parts, and will usually require that the pump ceases operation. However, these main components of a pump are typically robust components and, while maintenance may be required over the lifetime of the pump, this is on a relatively infrequent basis.

In addition to this basic pump functionality, pumps may also include additional functionality provided by ancillary devices attached thereto. In some cases, this can be complimentary to the pump's primary function. For example, some pumps include a compressor for providing a self-priming function. These ancillary devices may also be powered by the means for generating a drive force and therefore may be integrated with other parts of the pump.

In some cases, the ancillary devices are connected to the main drivetrain of the pump by means of a belt, so that the belt can be used to drive a wheel of an ancillary device to thereby power the device. One problem associated with this is that the belts and the additional devices can require additional maintenance at much shorter intervals to the main components of the pump, which can lead to pump downtime when it would not otherwise be necessary to service or change the components providing the primary function. The additional maintenance leads to additional maintenance costs and potentially increased pump downtime. This is particularly problematic where there are no backup pumps available (e.g. due to the high capital cost of pumps).

This effect can be compounded where access is restricted. In some cases, servicing of the pump may require disassembly of the pump thereby increasing the difficultly of maintenance and time spent maintaining the pimp. For example, maintenance of the drivetrain may require separation of the drive means and the part of the pump housing the impeller to access particular components or to separate one part from another. This can be onerous and require dismounting of whole pump sections and subsequent realignment, replacement of seals, leak testing, etc.. Hence, this can lead to significant pump downtime and expense.

### Summary of the invention

In a first aspect of the invention, there is provided a pump for pumping fluid according to claim 1. In particular, the pump comprises a pump housing which comprises a fluid inlet, a fluid outlet, a pumping chamber fluidly connected to the fluid inlet and the fluid outlet. Within the pumping chamber is provided a rotatable impeller for drawing fluid from the inlet and displacing the fluid out of the fluid outlet. The pump also comprises a drive source adapted to generate a drive force for rotating the impeller; a drivetrain assembly coupling the drive source to the impeller so as to transmit the drive force to the impeller, wherein the drivetrain assembly comprises a rotatable element arranged between the drive source and the impeller so as to transmit the drive force. The pump also includes an an ancillary device comprising a rotatable input element and the rotatable element of the drivetrain assembly is arranged such that it can be coupled to the rotatable input element of the ancillary device by an endless flexible mechanical element and thereby drive the rotatable input element when coupled by an endless flexible mechanical element. Additionally, the drive source, the drivetrain assembly and the impeller define a plurality of transmission elements and a pair of the transmission elements are spaced apart. The drivetrain assembly also comprises a moveable connecting element for coupling the spaced apart transmission elements, the moveable connecting element being moveable between: a first position in which the spaced apart transmission elements are coupled so as to enable the drive force to be transmitted from the drive source to the impeller; and a second position in which a gap is formed for allowing an endless flexible mechanical element to be threaded between the spaced apart transmission elements to allow the endless flexible mechanical element to couple the rotatable element and the rotatable input element of the ancillary device.

Embodiments of the invention therefore provide a pump comprising a pump chamber, an impeller provided in the pump chamber for displacing fluid and a powertrain comprising a drive or power generator (e.g. a drive means) for driving the pump and a means for transmitting the power generated by the generator to the impeller. The means for transmitting power ("transmission means") extends between the drive or power generator and the impeller and comprises a rotatable element and, optionally, further elements or members adapted to transfer the power generated by the generator to the impeller. The pump also includes an associated device. This device comprises an input for powering the device in the form of a rotatable wheel or cog which can receive a closed loop flexible member thereon. The rotatable element of the transmission means is arranged such that it can also receive the closed loop flexible member so as to operably connect the rotatable element to the rotatable input element. This allows a closed loop flexible member received to be used to drive the input wheel or cog of the associated device. Thus, the rotatable element of the transmission means is adapted to transfer a portion of the power provided by the generator to the associated device via a closed loop flexible member. Together, the components of the powertrain (e.g. the generator and transmission means, but not including the associated device) and the impeller form a series of transmission components or drive members. In embodiments, two of these transmission components or drive members are separated from one another to form a disconnect in the series of transmission components/drive members (e.g., they are spaced apart from one another - this can include a separation between the drive means and an element of the transmission means (e.g. the rotatable element), between two elements of the transmission means, or an element of the transmission means and the impeller, for example). The pump also includes a releasable connecting member (e.g. an engagement member), which is moveable between two configurations. One of these configurations is a first configuration in which the connecting member extends between the separated transmission components/drive members and is connected to both of the separated components such that the transmission means operably connects the power generator to the impeller. In other words, the connecting member bridges the gap created by the spaced-apart arrangement of the separated components so as to engage both of the separated components to thereby allow power to be transmitted between the separated components. The releasable connecting member can be moved into a second configuration in which the releasable connecting member is disengaged from at least one of the separated components, and optionally both of the separated components, so that the separated components are disconnected (e.g. a disconnect is formed by moving the connecting member at least partially out of the gap formed between the two separated components). In the second configuration, part of a closed loop flexible member, which does not form part of the pump in some embodiments, can be received between the separated components and can be positioned over the rotatable element and the input wheel or cog of the associated device such that the associated device can be powered by rotation of the rotatable element.

Embodiments therefore provide a pump having components that can easily be assembled and replaced. In particular, embodiments provide a pump in which endless flexible mechanical elements (e.g. belts, chains or ropes) that are susceptible to wear or which require more regular maintenance than the other components of the pump can easily and quickly be installed, replaced or maintained. By providing space apart transmission elements and a moveable connector which allows a closed loop flexible element to be looped over the rotatable element of the drivetrain assembly, the pumps have a means by which a belt or chain that couples two parts can be replaced or installed without requiring disassembly of the entire pump to provide access to parts to which the belt or chain is attached. This avoids having to disconnect and separate large parts of the pump, thereby decreasing the amount of time required maintenance and the downtime of the pump and the expertise required to perform maintenance. For example, this avoids having to disconnect and separate the drive source from the part of the pump housing the impeller and remove these in order to provide access to the drivetrain assembly such that a closed loop belt or chain can be looped over a part of the drivetrain assembly. It also avoids the difficulties associated with removing large parts of pumps systems, which may require specialist lifting equipment, particularly in large scale wastewater pumps, and the additional manpower required to carry out such a task. Furthermore, by avoiding having to disconnect and remove large sections of the pump, the risk of having to carry out further maintenance is also reduced. In particular, the risk of misalignment of the parts can be reduced or the requirement to replace multiple fastenings or seals can be avoided. All of this reduces the burden of replacing an endless flexible mechanical element.

This is particularly important as an endless flexible mechanical element, such as a closed loop belt (e.g. a belt formed of a polymer) or chain, typically has a much shorter lifetime than other, more robust components of a pump and therefore requires maintenance or replacement much more frequent intervals. Thus, without the provision of the movable connecting element extending between first and second transmission parts, the use of an associated device that is driven by a belt or chain connected to the drivetrain of a pump could dramatically increase the downtime of the pump and the cost of maintenance.

Endless flexible mechanical element includes, for example, a belt, a chain or a rope. Thus, the endless flexible mechanical element is an elongate piece of flexible material arranged in a loop so as to have no end - in other words, a closed loop member, such as a closed loop belt. In some embodiments of the invention, the pump comprises an endless flexible mechanical element, for example a belt. The endless flexible mechanical element belt may comprise an elongate flexible member having a circular cross-section, rectangular cross-section or a square cross-section and/or may comprise a flat outer surface, or a series of patterns, indentations or raised portions along its inner or outer face in order to provide traction or a timing function. In embodiments where the pump comprises an endless flexible mechanical element, the endless flexible mechanical element is provided on and extends around the rotatable element such that rotation of the rotatable element causes rotation of the endless flexible mechanical element and is provided on and extends around the input so that the input is driven by the endless flexible mechanical element.

The rotatable element may comprise an annular surface onto which the belt is received. For example, in an embodiment, the rotatable element may comprise a wheel or cog. The wheel or cog in an embodiment may comprise an annular outwardly facing surface extending around its circumference for receiving an endless flexible mechanical element, such as a closed loop belt. Rotation of the wheel, in this case by rotation of the rotatable element, thus causes the endless flexible element to travel around in a circular motion and in turn drive the rotatable input element provided on the ancillary device. Thus, the rotatable element can act as a pulley for an endless flexible mechanical element so as to drive the flexible element and, in turn, the rotatable input element of the ancillary device. In some embodiments where there is an annular surface on to which the belt or other endless flexible mechanical element can be received, the surface may be fixed relative to the rotatable element. In these embodiments, the annular surface is coaxial with the axis of rotation of the rotatable element.

The moveable connecting element is moveable from the first position to the second position in which a gap is formed for allowing an endless flexible mechanical element to be threaded between the spaced apart transmission elements to allow the endless flexible mechanical element to couple the rotatable element and the rotatable input element of the ancillary device. The gap is thus formed between either the two spaced apart transmission elements, one of the spaced apart transmission elements and the moveable connecting element or, where the moveable connecting element is formed of a plurality of separatable parts (e.g. with one part provided on one of the spaced apart transmission elements and one provided on the other of the spaced apart transmission elements), between two moveable connecting element parts. In other words, the spaced apart arrangement of the transmission elements defines a gap therebetween and in the second position, the gap may be fully exposed or may be partially exposed for allowing an endless flexible mechanical element to be passed through the gap. The gap provides a distance between the spaced apart transmission members that is sufficiently wide so as to allow for at least one dimension of an endless flexible mechanical element to pass therethrough. In embodiments, the gap in the second position is greater than the thickness of the endless flexible mechanical loop or is greater than the width of the endless flexible mechanical loop. For example, the gap may be at least 1 mm, at least 2 mm, at least 5 mm, at least 10 mm, at least 20 mm or at least 50 mm. Thus, the spaced apart arrangement of the transmission members provides a distance between the spaced apart transmission members that is sufficiently wide so as to allow for at least one dimension of an endless flexible mechanical element to pass therethrough. For example, the distance between the spaced apart transmission elements (at the point at which they are closest) is greater than the thickness of the endless flexible mechanical loop or is greater than the width of the endless flexible mechanical loop. For example, the distance between the spaced apart transmission elements may be at least 1 mm, at least 2 mm, at least 5 mm, at least 10 mm, at least 20 mm or at least 50 mm.

As set out above, the moveable connecting element is moveable between the first position and the second position. This movement may comprise sliding the moveable connecting element in and out of the gap formed between the spaced apart transmission elements (e.g. sliding onto one of the spaced apart transmission elements), pivoting the moveable connecting element (for example on an axis provided by one of the spaced apart transmission members) or rotating the moveable connecting element (e.g. on a screw thread provided on one or both of the spaced apart transmission members). So that the pump can operate, the moveable connecting element would need to be in a position other than the second position - for example, in the first position - after an endless flexible mechanical element has been attached. In one embodiment, the moveable connecting element is axially slidable between the first and second positions. The moveable connecting element can be a single element or may be formed of multiple elements which engage with each other to connect the spaced apart transmission members.

As set out above, the pump provides a means for driving the input of an ancillary or secondary device in the form of the rotatable element (e.g. a rotatable shaft). The purpose of the ancillary device is to provide additional functionality to the pump, which in some embodiments can be complimentary to the pump's primary function or in other cases can be secondary function. For example, in an embodiment, the pump further comprises a priming assembly (such as an air compressor or vacuum pump) for assisting in priming the pump, which eliminates the need for manual priming. In this embodiment, the compressor may form a part of a self-priming assembly, the design and function of which is set out in GB 1,157,767 A and GB 2,347,466 A, which are both incorporated herein by reference. The ancillary device may thus provide an effect that is complimentary to the main function of the pump - i.e. by priming the pump. In this embodiment, the secondary device may have an internal power or drive source that is driveable or driven by a belt or chain, for example an internal alternator driven by a rotatable element, which is in turn driven by the belt or chain to power the air compressor. In another embodiment, the ancillary device may be a power source, such as an alternator for providing a source of power to users in the vicinity of the pump. As will be appreciated, the ancillary device can be replaced and exchanged depending on the requirements of a user and a number of different types of ancillary devices may be used. The pump may comprise a mount for receiving an ancillary device. As will be appreciated, where such a device is installed or replaced, an endless flexible mechanical element will likely also be installed/removed/replaced. Thus, the use of the moveable connecting element can also improve the task of replacing an ancillary device, by avoiding the need to dismantle the pump to remove/replace/install an endless flexible mechanical element to drive the ancillary device.

The pump comprises two transmission elements (a first transmission element and a second transmission element) in spaced apart arrangement. This spaced-apart arrangement may thus be between any two of the transmission elements that can transmit the drive force from one to the other in order to drive the impeller. For example, this may be between two transmission elements that are adjacent to one other. By adjacent it is meant that the parts are next to one another in the drivetrain, such that they transfer the drive force to one another by means of the moveable connector element. For example, in embodiments, the spaced apart arrangement may be between the drive source and an adjacent part of the drivetrain assembly (for example, between the drive source and a drivetrain element or between the drive source and the rotatable element), between two adjacent components of the drivetrain assembly (for example, between two drivetrain elements or between a drivetrain element and the rotatable element) or a component of the drivetrain assembly and the impeller (for example, between a drivetrain element and the impeller or between the rotatable element and the impeller). This requires that at least a part of the first and second transmission elements are spaced apart - i.e. not directly in contact with one another so as to define a gap therebetween to thereby allow an endless flexible mechanical element to pass through the gap and to be attached to the rotatable element. In other words, either the adjacent transmission elements have a gap therebetween which provides access for an endless flexible mechanical element to be position around the rotatable element or a gap may be formed between one of the spaced apart elements and the moveable connecting element - the gap in the latter case being caused by the spaced apart relationship of the pair of spaced apart transmission elements. In some embodiments, the first and second transmission elements are separated such that no parts of the transmission elements are in contact with one another. Alternatively the first and second transmission elements may be arranged parallel axis to one another or in parallel planes, with the spacing between the parts being in the region between the parallel axis or parallel planes.

The pump includes a drivetrain assembly, which comprises a rotatable element. The drivetrain assembly may also comprise a drivetrain element. Drivetrain elements (e.g. components of the drivetrain assembly other than the rotatable element) may include a number of different parts, including a gear or a plurality of gears, a flywheel, an axle, a element. The drivetrain assembly may thus form a series of components arranged between drive source and the impeller providing a means for transmitting the drive force or power generated by the drive source (e.g. a motor or any prime mover) to the impeller so as to cause the impeller to rotate. The drivetrain elements may transmit the drive force at least in part, or entirely, by rotation of the drivetrain element. This transmission can be in a direction different to the direction in which the moveable element moves between the first and second positions.

The drivetrain assembly comprises a rotatable element (for example, a rotatable member or shaft) that can transmit at least part of the drive force by rotation. In some embodiments, the rotatable element may additionally transmit a portion of the drive force by another non-rotary motion, such as reciprocal movement along an axis, for example the first axis. Alternatively, the rotatable element may be fixed in a position in space - e.g. its position relative to the drive source and the impeller may be fixed. In some embodiments, the impeller is directly connected to the rotatable element. In this way, the rotary motion of the rotatable element can be used to drive both the impeller and the external device, thereby avoiding the need for additional components, which may increase the efficiency of the transfer of energy to both the impeller and the external device. In one embodiment, the rotatable element is a rotatable element. This can be an elongate member or rod.

The drivetrain assembly may also comprise an additional drivetrain element. In an embodiment, the rotatable element and a drivetrain element are adjacent one another and form the spaced apart transmission elements. In such an embodiment, the drivetrain element may transmit the at least a portion of the drive force to the rotatable element via the moveable connecting element, or vice versa (e.g. an adjacent component). This configuration is advantageous as it can reduce maintenance time, for example, if no access to separate motor housing or pump housings is required (for example, were the connector to connect a part of the drivetrain assembly to a part of the motor or the impeller). In some embodiments, the moveable connecting element in the second position may prevent relative rotation of the drivetrain element and the rotatable element such that the drivetrain element can transmit the drive force to the rotatable element through rotation of the rotatable element. Such an arrangement allows for the use of a relatively straightforward connection between the components. In one embodiment, the drivetrain element is a rotatable element, such as a shaft. In a further embodiment, the drivetrain element is a flywheel. Thus, in one embodiment, the flywheel may be upstream of the rotatable element (i.e. the flywheel may transmit the drive force to the rotatable element). This has the advantage that the rotation of an endless flexible mechanical element by the rotatable element is subject to the normalisation provided by the flywheel.

In one embodiment, the pair of spaced apart transmission elements are coaxial to one another. In some embodiments, both of the spaced apart transmission elements are coaxial and are rotatable about the common axis to transmit drive force generated by the drive generator. Where the pair of spaced apart transmission elements are coaxial, the spaced apart arrangement of the spaced apart transmission elements can include the provision of the first and second transmission elements with the spacing between the parts also been provided along the common axis. In some embodiments, a part of each of the pair of spaced apart transmission elements are coaxial with one another. For instance, the adjacent ends of each of the pair of the spaced apart transmission elements may be coaxial.

In one embodiment, the spatial position of the spaced apart transmission elements is fixed relative to one another, for example, the axial position is fixed. Thus, in this embodiment, the spaced apart transmission parts cannot move further away from one another or closer together. While the first and second transmission elements are spaced apart from one another, in some embodiments the first and second transmission elements are moveable relative to one another provided that they remain spaced apart. Thus, in some embodiments, the size of the spacing between the spaced apart transmission elements can be varied by relative movement of the spaced apart first and second transmission elements. In other words, the first and second spaced apart transmission elements are maintained in a spaced-apart arrangement, but the position of the first and second spaced apart transmission elements is moveable relative to one another.

In one embodiment, the moveable connecting element is attached to one of the pair of spaced apart transmission elements in both the first and second positions. In this way, the moveable connecting element may be secured to one of the spaced apart transmission elements to allow pivoting, sliding or rotation of the moveable connecting element on the transmission element to which it is secured. This also reduces the likelihood that the connecting element will be lost, damaged or misaligned during the replacement of a belt or chain. This is particularly useful in a complex pump where access to the moveable connecting element is limited.

In another embodiment, one of the pair of spaced apart transmission elements comprises the rotatable shaft. Thus, the moveable connecting element engages the rotatable shaft in the first position. The advantage of this arrangement is that the gap between the spaced apart components is alongside the rotatable element, around which the endless flexible mechanical element is to be provided. This may increase design freedom for the remainder of the pump and may reduce the amount of access required by a user or engineer replacing the endless flexible mechanical element. In some embodiments, the moveable connecting element engages the rotatable shaft in both of the first and second positions.

In another embodiment, the moveable connecting element comprises a sleeve and wherein the sleeve is received on one of the spaced apart transmission elements such that the moveable connecting element is slidable over the transmission element in a first direction between the first and second positions. By first direction it is meant movement along an axis and includes movement back and forth along an axis (for example, the axis of the transmission element on which the sleeve is received). This allows the moveable connecting element to be retracted onto the transmission element in question. This has the benefit that reduced clearance for access to or removal of the moveable connecting element is required, allowing for overall reduced pump size and for less interference with other components. In another embodiment, at least one of the spaced apart transmission elements comprises a sleeve and wherein the moveable connecting element is adapted to be received within sleeve such that the moveable connecting element is slidable within the transmission element in a first direction between the first and second positions.

Where the moveable connecting element comprises a sleeve, the moveable connecting element may comprise a cut-out extending at least partially along the length of the sleeve, for example in an axial direction. Such a cut-out can assist with attaching the moveable connecting element to the relevant transmission element by allowing the circumference of the sleeve to undergo size variations. This also can ensure that the sleeve is able to slide between the first and second positions, particularly under different operating conditions (e.g. temperature). The cut-out may extend to one end of the sleeve so as to enable to the face at the end of the sleeve to vary in size (e.g. to vary in circumference) and/or the cut-out may extend in more than one direction, for example the cut-out may also extend at least partially around the circumference of the sleeve. The cut-out can have an elongate shape, such as a rectangular shape.

Where the moveable connecting element comprises a sleeve, the sleeve and the transmission element on which the sleeve is received may each comprise corresponding interlocking keyed surfaces so as to prevent relative movement of the moveable connecting element and the transmission element (i.e. the transmission element over which the sleeve extends) in at least one direction to allow transmission of the drive force. This prevention of movement may optionally be relative rotation of the moveable connecting element and the transmission element, for example where the spaced apart transmission elements rotate to transmit the drive force. The prevention of relative movement is provided at least in the first position of the moveable connecting element. By keyed it is meant that the movable connecting element and the transmission element (i.e. the transmission element forming part of the pair of spaced apart transmission elements on which the sleeve is received) each comprise an interface having a profile corresponding to the interface of the other part. For example, the moveable connecting element can comprise a first interface having a first three-dimensional profile and the portion of the first or second spaced apart transmission element may comprise a second three-dimensional profile, the first and second profiles corresponding to one another to prevent relative movement in at least one direction. This interlocking mechanism or engagement means can serve multiple functions - first, in embodiments where the drive force is transmitted by the movement of transmission elements in the direction in which movement is restricted (for example, by rotation of the first and second transmission elements), this keyed mechanism provides a simple and effective means of ensuring the drive force can be transmitted between the moveable connecting element and the first or second transmission element. In other words, in embodiments, the keyed arrangement prevents relative movement in at least one direction which the first or second transmission element moves in order to transmit the drive force from the drive source to the impeller. This prevents relative movement of the moveable connecting element and the first or second transmission element and thereby assists in the transmittance of the drive force. Second, the keyed arrangement advantageously allows movement of the moveable connecting element between the first and second positions and can assist in preventing other movement which would otherwise take the moveable connecting element out of alignment with the first or second transmission element and/or the other of the first or second transmission element. This will reduce maintenance time by avoiding potential misalignment of the moveable connecting element with the first and second transmission element when it is moved between the first and second positions. For example, if the sleeve of the moveable connecting element is received on the first transmission element and is moved from the second position to the first position, the keyed arrangement will ensure that the moveable connecting element is still aligned with the second transmission element. This is particularly so in embodiments where movement is prevented by the keyed arrangement in all directions apart from the direction in which the moveable connecting element moves between the first and second positions (i.e. herein the first direction, which includes movement back and forth in the direction). This is particularly the case where the moveable connecting element interfaces with the first and/or second transmission elements, as will be discussed in embodiments below. As an alternative to or in addition to the keyed arrangement, the pump may further comprise a releasable locking mechanism to releaseably prevent movement of the moveable connecting element between the first and second positions.

In one embodiment, either the keyed surface on sleeve or the transmission element on which the sleeve is received comprises a channel extending in the first direction and the keyed surface on the other of the sleeve or the transmission element (i.e. the transmission element on which the sleeve is received) comprises an elongate protrusion adapted to be received within the channel to prevent relative rotation. This provides a keyed arrangement that is easy to manufacture and provides and effective way of preventing relative rotation of the parts. This arrangement also still allows the connector to slide back and forward in the direction of the channel. Thus, in embodiments where the channel/protrusion extends in the first direction (i.e. the direction in which the moveable connecting element moves between the first and second positions), the connector can be limited to movement only in the first direction (along a single axis).

In a further embodiment, the moveable connecting element comprises a connector interface and one of the spaced apart transmission elements comprises a corresponding transmission interface for engaging the connector interface to prevent relative movement of the moveable connecting element and the transmission element in at least one direction to allow transmission of the drive force. In this embodiment, the interfaces are connected in the first position and disconnected in the second position. This arrangement may be provided instead of or in addition to the keyed arrangement referred to above. For example, the keyed arrangement may provide a connection between one of the two spaced apart transmission elements and the moveable connecting element and the interface may provide a connection between the other of the two spaced apart transmission elements and the moveable connecting element. This interface can provide a quick release/quick engage mechanism for disengaging the moveable connecting element from one of the spaced apart transmission elements, which can reduce maintenance time and reduce the level of training required for an engineer conducting the maintenance. For example, additional locking or connecting parts can be omitted. This arrangement also has benefits in that is can be machined more easily than other, more complex means of interfacing parts. In some embodiments, the moveable connecting element comprises two of the abovementioned interfaces - a first interface for interfacing with a corresponding first transmission interface on the first transmission element of the pair of spaced apart transmission elements and a second interface for interfacing with a corresponding second transmission interface. In all of the above embodiments, the at least one direction may optionally be relative rotation of the moveable connecting element and the transmission element. In one embodiment, the interfaces may be engaged by movement of the moveable connector from the second position to the first position.

In one embodiment of the above interface, the moveable connecting element comprises a cylindrical body and the connector interface comprises an array of radially extending teeth provided around the circumference of the cylindrical body; and the transmission interface comprises a corresponding array of radially extending teeth adapted to engage the teeth provided on the circumference of the cylindrical body. The radially extending teeth may be provided on the inner or outer surface of either of the moveable connecting element or the cylindrical body and may extend fully or partially around their respective circumferences. Where the moveable connecting element comprises a sleeve, the sleeve may define the cylindrical shape or the sleeve may be in addition to the cylindrical body. The cylindrical body may also itself define a sleeve and be received on or in one of the spaced apart transmission elements.

One particularly advantageous embodiment is an embodiment in which the moveable connecting element and the transmission element on which the transmission interface is provided transmit at least a portion of the drive force for driving the impeller by rotation about an axis and where engagement and disengagement of the connector interface and the transmission interface (i.e. movement between the first and second positions of the moveable connecting element) is achieved by movement other than rotation about the axis (e.g. movement back and forth along an axis, for example the axis about which the transmission element rotates in order to transmit the drive force). In this embodiment, the moveable connecting element and the transmission element can be easily connected to one another and disconnected from one another by movement between the first and second positions, which causes engagement of the teeth of each of the interface parts. As the teeth are arranged to permit transmission of the drive force, relative rotation of the moveable connecting element and the transmission element on which the transmission interface is provided. This embodiment therefore provides a straightforward means by which the connection between the spaced apart transmission elements can be disconnected and connected to allow maintenance and, in particular, replacement or removal of an endless flexible mechanical element.

In some embodiments, the pump further comprises an endless flexible mechanical element received on the rotatable element of the drivetrain assembly and the rotatable input element of the ancillary device so as to couple the elements.

Accordingly, in an embodiment of the invention there is provided a pump comprising a drive source having a rotatable output shaft; a centrifugal pump assembly, the centrifugal pump assembly comprising a housing which defines a pumping chamber having a fluid inlet and a fluid outlet, and a rotatably drivable impeller arranged in the pumping chamber for moving a fluid from the inlet to the outlet; a priming assembly, the priming assembly comprising a rotatably drivable vacuum pump having a rotatable input shaft, and a transmission assembly coupling the rotatable output shaft of the drive source to the impeller of the centrifugal pump assembly, the transmission assembly comprising a plurality of coaxial transmission elements arranged between the drive source and the centrifugal pump assembly, wherein one of the coaxial transmission elements is coupled to the rotatable input shaft of the priming assembly by a belt or chain; wherein an adjacent pair of the coaxial transmission elements are spaced apart, and the transmission assembly further comprises an axially slidable connecting element for rotatably coupling the pair, the connecting element having a first axial position in which the transmission components are rotatably coupled and a second axial position in which the belt or chain can be threaded therebetween.

In a second aspect of the invention, there is provided a method of inserting or removing an endless flexible mechanical element from a pump for pumping fluid. The pump can be in accordance with any of the abovementioned aspects or embodiments. The method comprises moving the moveable connector element from the first position to the second position to form a gap, inserting a part of an endless flexible mechanical element through the gap, connecting the endless flexible mechanical element to the rotatable element and rotatable input element so as to couple the elements; and moving the moveable connector element from the second position to the first position.

The above method leads to an arrangement in which an endless flexible mechanical element is arranged over the rotatable element and the rotatable input shaft of the ancillary device such that rotation of the rotatable element drives the endless flexible mechanical element and thereby drives the rotatable input of the of ancillary device.

In the above embodiments, the pump is for pumping fluid. Fluid includes liquids, for example water, including wastewater.

### Brief description of the drawings

Specific embodiments of the invention will now be discussed in detail with reference to the accompanying drawings, in which:
Figure 1 shows a perspective view of a pump according to the invention;
Figure 2 shows a perspective view of a pump according to the invention with the motor omitted from the drawing for the sake of clarity and with the moveable connector in the first position;
Figure 3 shows a perspective view of a pump according to the invention with the motor omitted from the drawing for the sake of clarity and with the moveable connector in the second position;
Figure 4 shows end perspective view of a pump according to the invention with the motor omitted from the drawing for the sake of clarity and with the moveable connector in the second position;
Figure 5 shows a perspective view of a pump according to the invention with the motor omitted from the drawing for the sake of clarity and with the moveable connector in the first position;
Figure 6 shows a perspective view of a pump according to the invention with the motor omitted from the drawing for the sake of clarity and with the moveable connector in the second position;
Figure 7 shows a side view of a pump according to the invention with the motor and a flange/housing omitted from the drawing for the sake of clarity and with the moveable connector in the second position;
Figure 8 shows a perspective view of a pump according to the invention with the motor and a flange/housing omitted from the drawing for the sake of clarity and with the moveable connector in the first position; and
Figure 9 shows a perspective view of the connector according to the invention.

### Detailed description

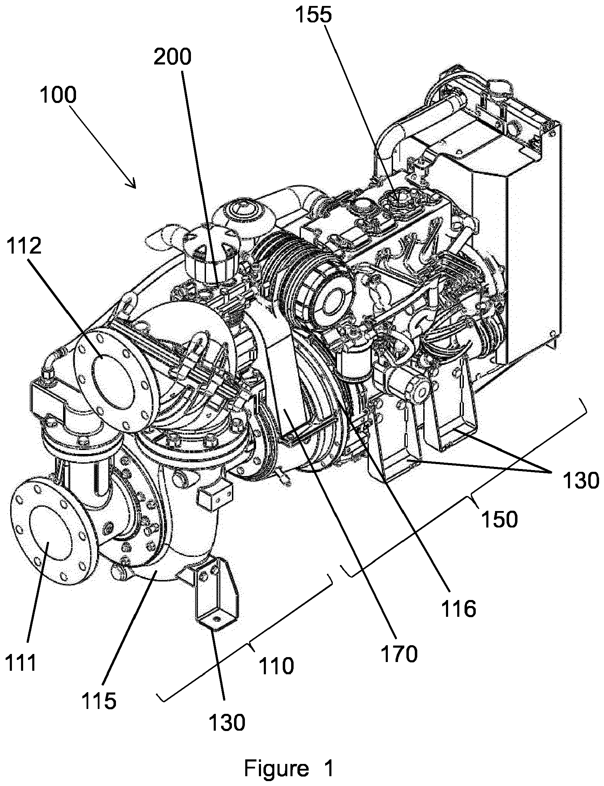

An embodiment of the invention in the form of a centrifugal pump 100 is shown in Figures 1 to 9. The pump 100 can be considered to be formed of two main sections - a pump section 110 and a motor section 150, which are operably connected to provide the pump section with power from the motor section 150. The pump section 110 primarily comprises the components that come into contact with the wastewater and includes an impeller (not shown), a fluid inlet 111 into which fluid is drawn by the impeller and a fluid outlet 112 out of which fluid is pumped. The impeller is contained within a pumping chamber (not shown), which is housed within an impeller housing 115, and draws fluid into the pumping chamber through the fluid inlet 111 and expels it through the fluid outlet 112. The fluid outlet 112 includes a non-return valve (not shown) which permits fluid to pass from the pumping chamber and out of the fluid outlet 112 but prevents reverse flow.

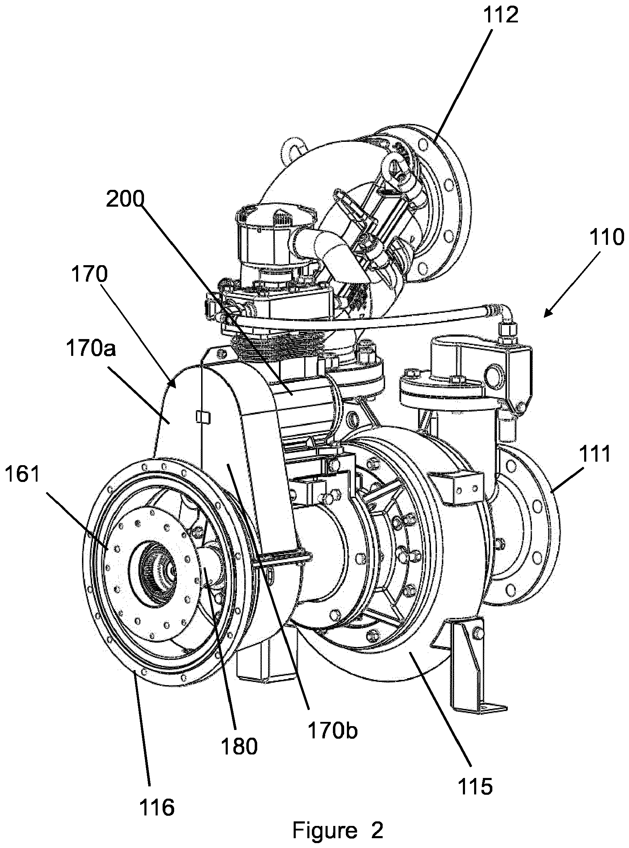

As explained above, the entire pump 100 is shown in Figure 1. However, for the sake of clarity the motor 155 has been omitted from Figures 2 to 8 so that the other components of the pump are more clearly visible. In practice and in accordance with the invention, the motor 155 would remain attached to the remainder of the pump when performing the method in accordance with the invention (i.e. during attachment or removal of a belt).

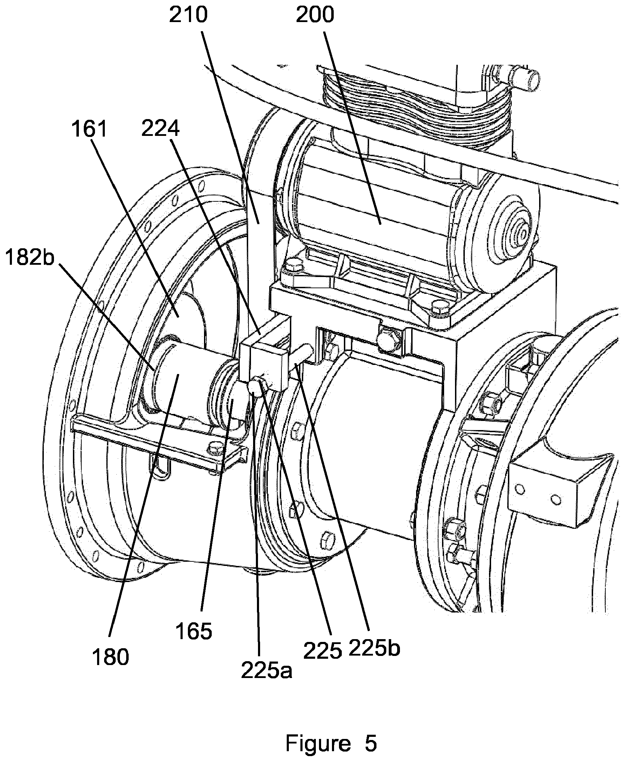

The motor section 150 (the powertrain) comprises a drive source in the form of a diesel-powered motor 155 and a drivetrain assembly, which assembly operably connects motor 155 to the impeller so as to transmit the drive force generated by the motor 155 to the impeller. In the pump of this embodiment, the drivetrain assembly comprises a flywheel 161 which is directly connected to the motor 155 (as will be appreciated and as set out above, Figures 2 to 8 have the motor 155 omitted so that the relevant components of this embodiment can be seen; however, it will be understood that the motor 155 does remain attached to the flywheel 161 in this embodiment and a flange 116 extending around the flywheel 161 and forming part of a housing would remain attached to a corresponding flange provided on the omitted part of the pump 100), and a rotatable drive shaft 165, which is directly connected to the impeller (see Figures 2 and 5, for example). Although not visible, bearings and seals are provided along the length of the drive shaft 165 to prevent fluid leaking from the pumping chamber.

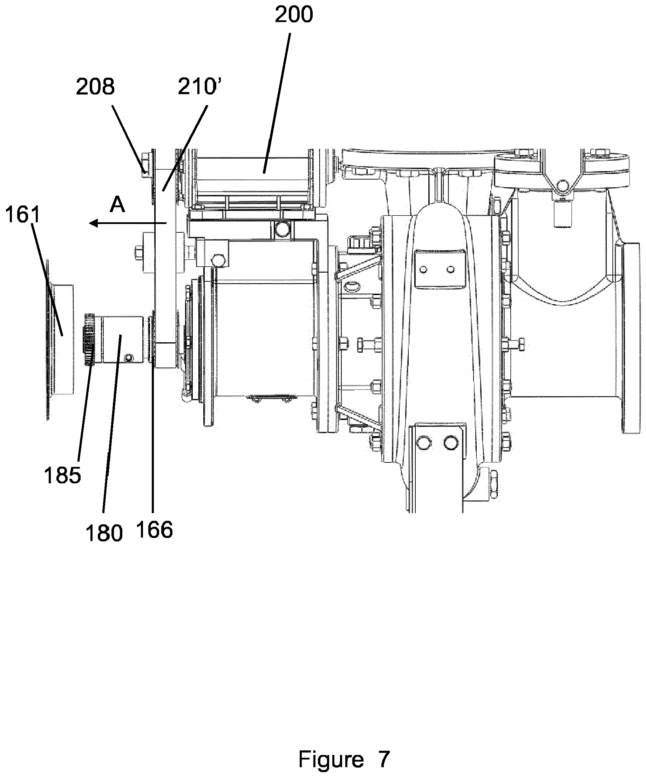

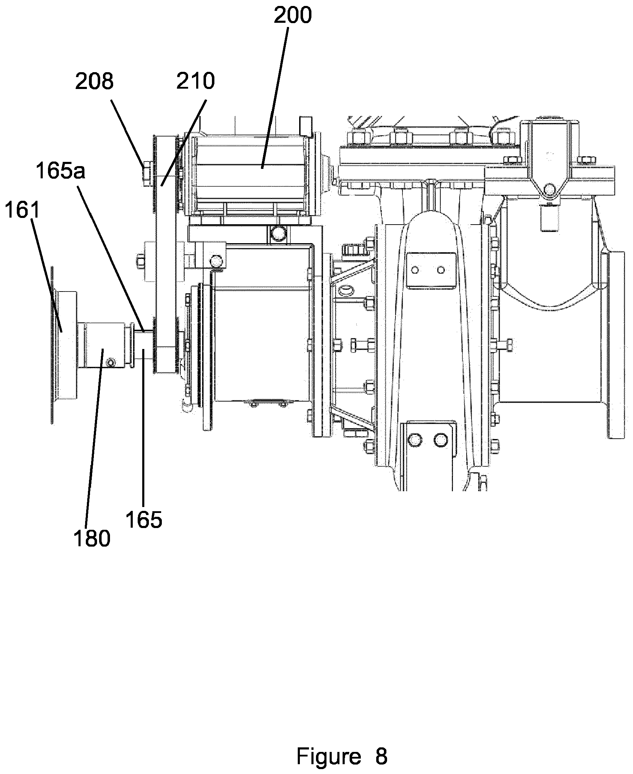

In this embodiment, the flywheel 161 and the rotatable drive shaft 165 are coaxial such that they rotate about the same axis but are spaced apart from one another such that a gap is defined between the end of the drive shaft 165 that is closest to the flywheel 161 (i.e. the end of the drive shaft 161 nearest the motor 155) and the end flywheel 161 facing the drive shaft 165 (i.e. the end of the flywheel 161 nearest the impeller). This gap is most readily apparent in Figure 7. The drivetrain assembly also comprises a moveable connector 180, which will be described in more detail, below. In a first position of the moveable connector 180 (shown most clearly in Figures 5 and 8), the moveable connector 180 connects the flywheel 161 and the rotatable drive shaft 165 such that rotation of the flywheel 161 causes rotation of the drive shaft 165 and, therefore, the motor 155 can drive the impeller.

Accordingly, the motor 155, the flywheel 161, the drive shaft 165 and the impeller form a series of transmission elements, with the flywheel 161 and drive shaft 165 defining adjacent spaced apart transmission elements.

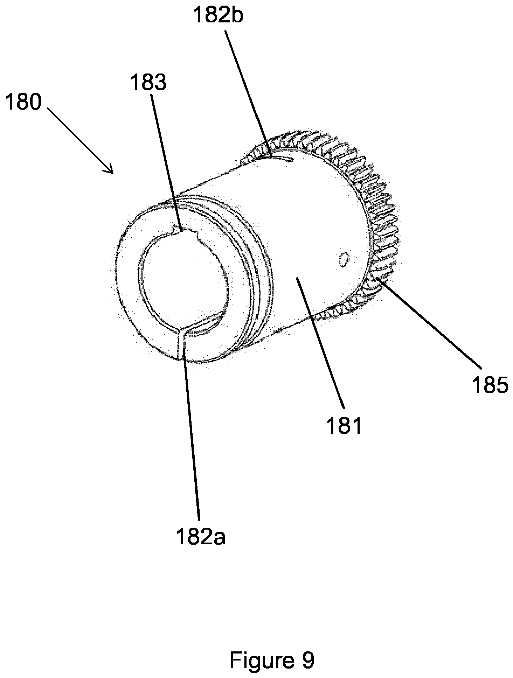

The connector 180 is shown in isolation in Figure 9. As can be seen from this figure, the connector 180 has the shape of a hollow cylindrical body defined by sleeve 181. The sleeve 181 is sized so as to tightly fit over the drive shaft 165 but to remain slidable relative thereto. So as to allow for variations in the size of the sleeve 181 and the drive shaft 165, which may occur as a result of variations in machining or due to variations in conditions (such as temperature), the sleeve includes a cut-out 182a, 182b which extends radially through the sleeve 181. Although not fully visible in Figure 9, the cut-out 182a, 182b has a L-shape and thus comprises an axially extending cut-out portion 182a, which extends parallel to the central axis of the sleeve along a part of the length of the sleeve (in this embodiment, terminating near to one end of the sleeve), and a circumferential cut-out portion 182b, which is connected to the axially extending cut-out 182a and extends partially around the circumference of the sleeve 181 - in this embodiment, extending around approximately half of the circumference of the sleeve 181.

The connector 180 also comprises a keyed surface in the form of an axially extending elongate channel 183 provided on the inside surface of the sleeve 181. The channel 183 is sized so as to correspond to a keyed surface provided on the drive shaft 165 in the form of an axially extending elongate protrusion 165a (see Figure 8). The channel 183 of the connector 180 and the protrusion 165a thus mate to prevent relative rotation of the drive shaft 165 and the connector 180, but are sized so that the connector 180 can still slide back and forth along the drive shaft 165 in the axial direction. In this way, rotation of the connector 180 when the drive shaft protrusion 165a is received in the channel 183 causes rotation of the drive shaft 165, and thus also rotation of the impeller. In this embodiment, the protrusion 165a is longer than the channel 183 such that the connector 180 can be slid along the protrusion 165a without disengaging the protrusion 165a. In this way, the connector 180 remains aligned with the drive shaft 165 and the flywheel 161 even when moved.

In addition to the keyed surface, the connector 180 also comprises a connector interface in the form of an array of radially extending teeth 185 provided on the outer surface of one end of the sleeve 181. In this embodiment, the connector 180 is positioned with the end having the array of teeth 185 facing the flywheel 161. The purpose of the array of teeth 185 is to engage with the flywheel 162 to prevent relative movement of the connector 180 and the flywheel 161. In particular, the flywheel 161 comprises a central circular cut-out 162 which is coaxial with the drive shaft 165 and the sleeve of the connector. The circular cut-out 162 has an inwardly facing circumferential surface 162 on which an array of radially inwardly extending teeth 162a is provided. These teeth 162a and the cut-out 162 are sized so that the radially outwardly extending teeth 185 of the connector 180 can mesh with the flywheel teeth 162a so as to prevent relative movement of the flywheel 161 and the connector 180. In this embodiment, the teeth on both of the connector 180 and the flywheel 161 are shaped so that the teeth can be disengaged and engaged by axial movement of the connector 180 (i.e. movement along the shared axis of the flywheel 161, the drive shaft 165 and the connector 180). Thus, the teeth 162a, 185 provide a releasable interface between the flywheel 161 and the connector 180 so that rotation of the flywheel 161 causes rotation of the connector 180 when the teeth 162a, 185 are engaged (i.e. in the first position).

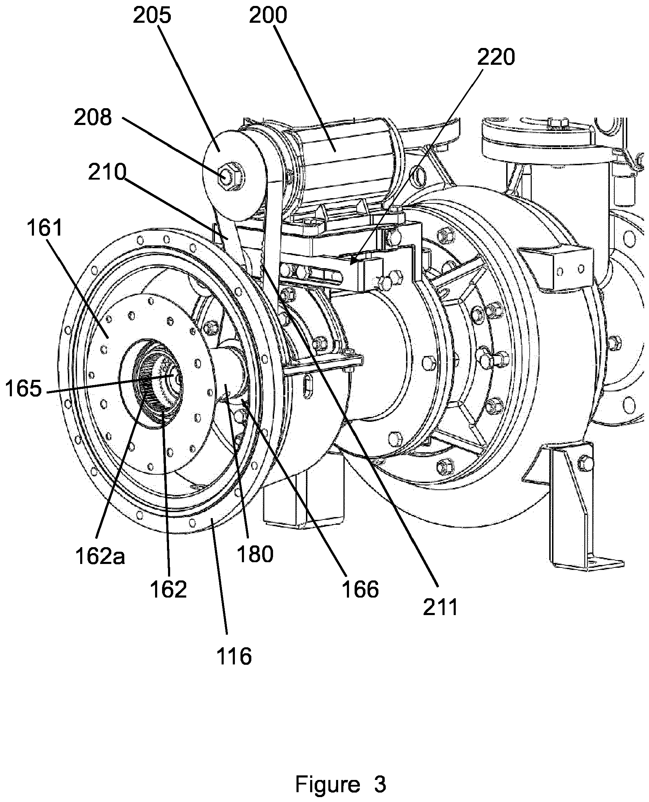

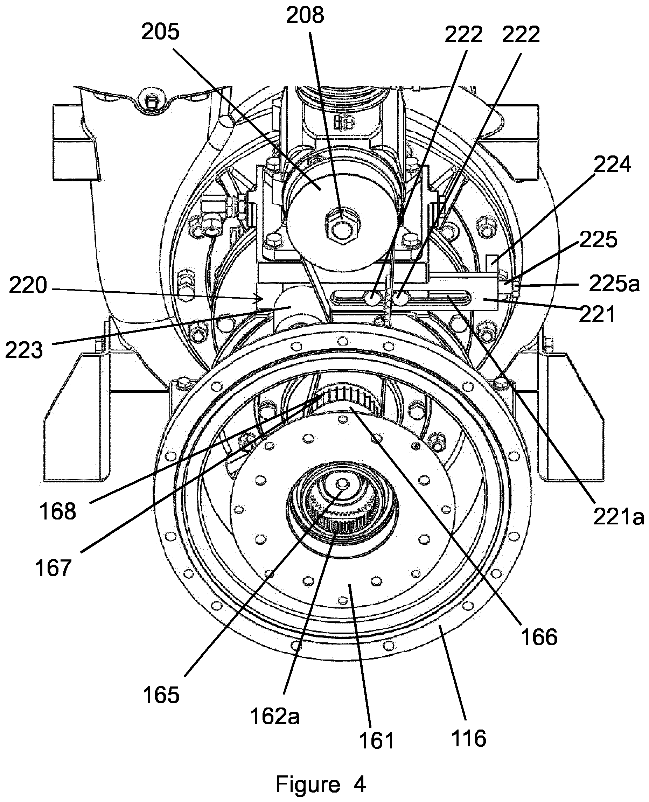

The pump 100 also includes an ancillary device in the form of a belt-driven air compressor 200. In this embodiment, the air compressor 200 serves as part of a priming mechanism, which provides a self-priming function to the pump. The arrangement of the pump for self-priming and the mechanism by which this is achieved using an air compressor is set out in GB 2,347,466 A, which is incorporated herein by reference. As can be seen in Figures 3 and 4, the air compressor 200 comprises an input wheel 205 for powering the air compressor 200, which input wheel 205 comprises an outer circumferential surface onto which a belt 210 can be attached. In this embodiment, the belt 210 is an elongate strip of polymeric material with fabric reinforcement, with the ends joined to form an endless loop. The belt 210 comprises a rectangular cross-section (i.e. taken laterally across the width of the belt 210) and comprises an array of teeth 211 formed on the radially inwardly facing surface of the belt 210, which array 211 extends over a portion of the inner surface of the belt to provide a timing function. Although not visible, the outer circumferential surface of the input wheel 205 comprises a series of radially outwardly extending teeth, which mesh with array 211 as the belt 210 travels around the input wheel. The input wheel 205 is mounted on an axle 208 for rotation thereabout, the rotation of the axle 208 thereby generating power to power the air compressor 200.

As can be seen in Figures 3 to 8, the belt 210 provided on the input wheel 205 of the air compressor 200 also extends around the drive shaft 165 of the drivetrain assembly. In particular, the belt 210 extends around an output wheel 166 provided on the drive shaft 165 and located in the same plane as the input wheel 205 such that the input wheel 205 and the output wheel 165 are able to form a pulley system. The output wheel 166 has a similar structure to the input wheel 210 of the air compressor 200 in that it comprises an outer circumferential surface 167 having a plurality of radially outwardly extending teeth 168 for meshing with the array of teeth 211 on the belt 210. The output wheel 166 in this case is mounted around the drive shaft 165 so as to be coaxial with the drive shaft 165. In this way, rotation of the drive shaft 165 causes rotation of the output wheel 165 to thereby drive the belt 210, which in turn causes rotation of the input wheel 205 of the air compressor 200 and thus powers the air compressor 200. In this way, part of the drive force generated by the motor 155 is used to power the air compressor 200. In normal operation, the input wheel 205 of the air compressor 200 and the belt 210 are covered by a belt housing 170 formed of two separate housing parts 170a 170b.

As will be appreciated, during the lifetime of a belt, such as belt 210, the circumference of the belt may increase thereby reducing efficiency resulting from slippage, for example. Furthermore, due to variations in manufacturing and variations between types of ancillary device means that the distance between the points of rotation of the output wheel 166 and the input wheel of an ancillary device may vary. Similarly, the circumference of the input wheel and the output wheel 166 may vary. To avoid these problems, the pump 100 further comprises a tensioner 220 (see Figure 4). The tensioner 220 provides a means for applying tension to the belt 210 to reduce slippage and to adjust for variations in the distances between the wheels - i.e. the use of a tensioner 220 allows the belt 210 to be attached with the most efficient amount of tension applied. In this embodiment, the tensioner 220 applies an inwardly directed force to the outer surface of the belt 210 so as to apply tension to the belt 210.

In particular, the tensioner 220 comprises an elongate tensioner member 221 with a cylindrical bearing member 223 provided on one end of the tensioner member 221 extending outwardly from the surface of the tensioner member 221. The tensioner member 221 is secured to a frame 101 of the pump 100 located behind the belt 205 and is positioned on the frame 101 so to bisect an axis extending between the input wheel 205 of the air compressor 200 and the output wheel 166 provided on the drive shaft 165. The tensioner member 221 comprises a cut-out portion 221a extending along its elongate axis and is attached to the frame 101 using two threaded spaced apart screws 222, which extend through the cut-out portion 221a and engage with threaded holes provided on the frame 101. When the screws 222 are tightened against the frame 101, movement of the tensioner member 221 is prevented; however, when the screws 222 are loosened, the tensioner member 221 can slide relative to the frame 101 in a plane perpendicular to a plane extending between the input wheel 205 and the output wheel 166. In this way, the bearing member 223 can be moved towards and away from a central axis extending between the input wheel 205 and the output wheel 166 to thereby increase or decrease the amount of tension applied to the belt 210 provided on the input wheel 205 and the output wheel 166.

At the opposite end of the elongate tensioner member 221 to the bearing member 222 is a projection 224, which projects outwardly in the opposite direction to the bearing member 222. The tensioner member 221 is sized so that from a front view of the belt 210 looking towards the impeller (i.e. from the direction shown in Figure 4), the bearing member 223 is provided on one side of the belt 210 and the projection 224 is provided on the other side of the belt. In this case, when the tensioner 220 is mounted on the frame 110, the projection 224 projects away from the belt 210 and towards the impeller. Extending through a threaded hole provided in the projection 224 is a screw-threaded bolt 225. The bolt 225 extends parallel to the elongate tensioner member 221 and the end 225b of the bolt 225 bears against the frame 101 while the head 225a of the bolt 225 remains exposed on the exposed side of the projection 224. Thus, rotation of the bolt 225 either increases the amount of the end 225b extending beyond the projection 224 or reduces the amount of the end 225b extending therethrough. In this way, since the amount of the end 225b extending through the hole in the protrusion limits the distance between the projection 224 and the frame 101, movement of the tensioning member 221, and thus also the bearing member 223, can be controlled by a bolt 225. For example, by rotating the bolt 225 to extend the length of the end 225b extending through the hole of the projection 224, the distance between the projection 224 and the frame 101 is increased. This causes the bearing member 223 to be drawn towards the central axis extending between the input wheel 205 and the output wheel 166. Thus, when a belt 210 is attached to the pump 100, this movement will increase the tension applied to the belt 210.

In normal use of the pump 100, the pump 100 will be in a configuration in which the moveable connector 180 is in the first position (shown in Figures 5 and 8) in which the moveable connector 180 is positioned on the drive shaft 165 so as to extend across the gap between the drive shaft 165 and the flywheel 161 and the array of teeth 185 on the connector 180 are meshed with the corresponding teeth 162a of the flywheel 161 such that rotation of the flywheel 161 causes rotation of the connector 180, which in turn causes rotation of the drive shaft 165 and the impeller. In this way, the power or drive force generated by the motor 155 can be transmitted from the motor 155 to the impeller to thereby pump fluid, such as wastewater.

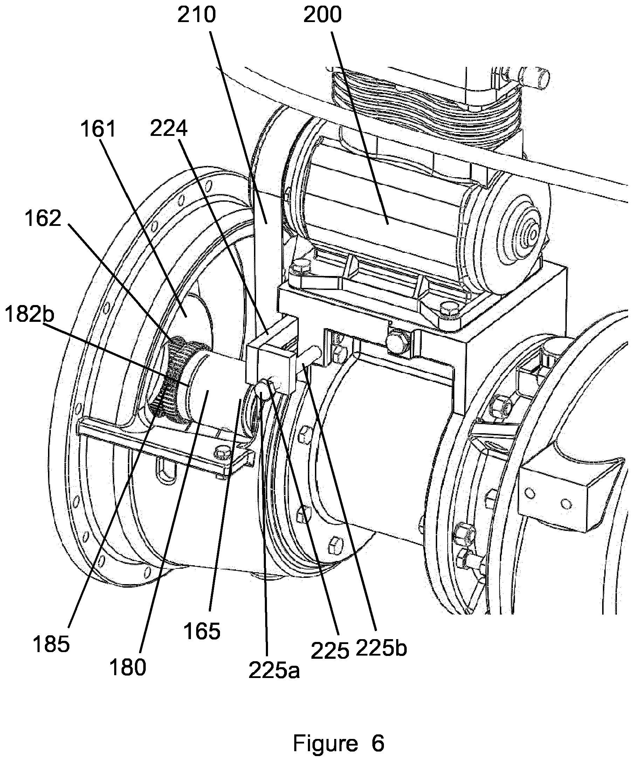

When replacement of the belt 210 is required, the belt housing parts 170a and 170b can be removed to provide access to the belt 210 and, most importantly, the connector 180. As can be seen in Figure 1, the belt housing 170 can be accessed without requiring the removal of any other components of the pump 100. From this position, the connector 180 can be slid from the first position (shown in Figures 5 and 8) to a second position in which a gap is formed between the drive shaft 165 and the flywheel 161 (the second position is shown in Figures 2, 3, 4, 6 and 7). In particular, the connector 180 can be slid along the drive shaft 165 away from the flywheel 161 towards the impeller. This can be achieved by hand or using a tool. The movement of the connector 180 results in disengagement of the array of teeth 185 on the connector 180 from the corresponding array of teeth 162a provided on the flywheel 161. As the connector 180 is slid further back on the drive shaft 165, a gap opens up between the flywheel 161 and the connector 180. In this embodiment, the connector 180 can continue to retract on the drive shaft 165 until the connector 180 is retracted beyond the end face of the drive shaft 165. The gap in this embodiment is thus defined between the flywheel 161 and the drive shaft 165. This second position is most clearly visible in Figures 6 and 7.

With the connector 180 retracted on the drive shaft 165 in the second position, the gap is now sufficient that the belt 210 can be slid off of the input wheel 205 and the output wheel 166 and towards the flywheel 161 (see arrow A in Figure 7). In order to release the belt 210 from the input wheel 205 and the output wheel 166 it may be necessary to release the tension provided by the tensioner 220. Where required, the screws 222 can be loosen so as to permit sliding of the tensioner member 221. The bolt 225 of the tensioner 220 can then be retracted so as to reduce the amount of the end 225b of the bolt 225 extend through the hole of the protrusion 165a and thus allow the bearing member 223 to relieve the tension on the belt 210. Movement of the tensioner member 221 is limited by the length of the elongate cut-out 221a.

Once the belt 210 has been removed from the input wheel 205 and the output wheel 166, a new belt 210' can be inserted the gap between the connector 180 and the flywheel 167. With the tensioner 220 loosened, the new belt 210' can be mounted over the connector 180 and the drive shaft 165 and onto the output wheel 166. The new belt 210' can then be looped over the input wheel 205 of the air compressor 200. If the belt 210' is not sufficiently tight, the tensioner 220 can be used to apply some tension. With the screws 222 loosened, the bolt 225 can be rotated to move the protrusion 224 away from the frame 101 of the pump 100 thereby forcing the bearing member 223 towards the central axis extending between the input wheel 205 and the output wheel 166. The bearing member 223 will then contact the new belt 210' and apply tension thereto as the bolt 225 is further rotated. Once the desired tension has been applied, the screws 222 are tightened to prevent further movement of the tensioning member 221. In this way, the tensioner 220 provides a quick and effective means for tensioning a belt. This may combine with the moveable connector 180 to provide a quicker and less disruptive way of changing or installing a belt. Moreover, this tensioner 200 requires a user to have minimal training and tools.

With the new belt 210' installed, the moveable connector 180 can be slid back to the first position by sliding the connector 180 towards the flywheel 161, as shown in Figure 8. With the flywheel 161 remaining in its original position and the protrusion 165a of the drive shaft 165 cooperating with the channel 183 of the connector 180 to prevent rotation of the connector 180 on the drive shaft 165, the connector 180 can slide back into engagement with the flywheel 161 without any further adjustment necessary. In the event that adjustment is necessary, the flywheel 161 can be rotated as the connector 180 is slid into contact with the flywheel 161. The connector 190 is thus back in the first position in which the flywheel 161 is connected to the drive shaft 165 and, with the belt housing 170 replaced, the pump 100 and air compressor 200 can function as usual.

The use of the connector accordingly avoids the need to remove large parts of the pump 100 to access the input wheel 205 and output wheel 166 and remove the belt 210 from the pump. This dramatically reduces the time required for an engineer or user to replace an endless flexible mechanical element and reduced the equipment and expertise required to do so. Although not shown, the pump 100 is typically mounted on a base (see mounting clips 130 shown in Figure 1. Thus, in prior art pumps, entire parts of the pump (e.g. the motor 155 and/or the pump section 110) would have needed to have been dismounted from the base in order to access an end of the drive shaft 165 so that the belt 210 could be removed and replaced by a new belt 210'. Thus, as will be appreciated, this significantly reduces the time and effort required to replace a belt.

Other variations to the disclosed embodiments can be understood and effected by those skilled in the art in practicing the claimed invention, from a study of the drawings, the disclosure, and the appended claims. For example:

Although in the above embodiment, the pump 100 is provided with a belt 210, it will be appreciated that other endless flexible mechanical elements can be used to drive an ancillary device as part of a pulley system, such as a rope or a chain. It will also be appreciated that pumps can be used with different types of ancillary devices and the devices may be changed during the lifetime of the pump, for example if repair of the ancillary device is required, or if a different type of ancillary device is required.

While the gap in is defined between the flywheel 161 and the drive shaft 165, it will be appreciated that the gap could be formed between any transmission members.

Although in the embodiment of Figures 1 to 9, the moveable connecting element is depicted as a single element, the moveable connecting element may comprise multiple connecting element parts which engage with each other to connect the spaced apart transmission members. Movement of the moveable connecting element when it is formed from multiple elements may therefore comprise movement of multiple elements from a first position to a second position. For example, a first moveable connecting element part may be provided on the first of the spaced apart transmission elements and a second moveable connecting element par may be provided on the second spaced apart transmission element. In the first position, the first and second parts may engage one another to allow transmission of the drive force. In the second position, the first and second parts may be disengaged from one another and moved so as to define a gap therebetween. In other embodiments, there may be one single moveable engagement element part.

## Claims

1. A pump (100) for pumping fluid, the pump (100) comprising:
a pump housing comprising a fluid inlet (111), a fluid outlet (112) and a pumping chamber fluidly connected to the fluid inlet (111) and the fluid outlet (112);
a rotatable impeller provided within the pumping chamber for drawing fluid from the fluid inlet (111) and displacing the fluid out of the fluid outlet (112);
a drive source (155) adapted to generate a drive force for rotating the impeller;
a drivetrain assembly coupling the drive source (155) to the impeller so as to transmit the drive force to the impeller, the drivetrain assembly comprising a rotatable element (165) arranged between the drive source (155) and the impeller so as to transmit the drive force; and
an ancillary device (200) comprising a rotatable input element (205),
wherein the rotatable element (165) of the drivetrain assembly is arranged such that it can be coupled to the rotatable input element (205) of the ancillary device (200) by an endless flexible mechanical element (210; 210') and thereby drive the rotatable input element (205) when coupled by an endless flexible mechanical element (210; 210');
wherein the drive source (155), the drivetrain assembly and the impeller define a plurality of transmission elements (155; 161; 165) and wherein a pair of the transmission elements (161; 165) are spaced apart, and
wherein the drivetrain assembly further comprises a moveable connecting element (180) for coupling the spaced apart transmission elements (161; 165), the moveable connecting element (180) being moveable between: a first position in which the spaced apart transmission elements (161; 165) are coupled so as to enable the drive force to be transmitted from the drive source (155) to the impeller; and a second position in which a gap is formed for allowing an endless flexible mechanical element (210; 210') to be threaded between the spaced apart transmission elements (161; 165) to allow the endless flexible mechanical element (210; 210') to couple the rotatable element (165) and the rotatable input element (205) of the ancillary device (200).

2. The pump of any preceding claim, wherein the pair of spaced apart transmission elements (161; 165) are coaxial.

3. The pump of any preceding claim, wherein the axial position of the spaced apart transmission elements (161; 165) is fixed relative to one another.

4. The pump of any preceding claim, wherein the moveable connecting element (180) is attached to one of the pair of spaced apart transmission elements (161; 165) in both the first and second positions.

5. The pump of any preceding claim, wherein one of the pair of spaced apart transmission elements (161; 165) comprises the rotatable element (165) such that the moveable connecting element (180) engages the rotatable element (165) in the first position.

6. The pump of any preceding claim, wherein the moveable connecting element (180) is axially slidable between the first and second positions.

7. The pump of any preceding claim, wherein the moveable connecting element (180) comprises a sleeve (181) and wherein the sleeve (181) is received on one of the spaced apart transmission elements (161; 165) such that the moveable connecting element (180) is slidable over the transmission element (161; 165) in a first direction between the first and second positions.

8. The pump of claim 7, wherein the sleeve (181) and the transmission element (161; 165) on which the sleeve (181) is received each comprise corresponding interlocking keyed surfaces (165a; 183) so as to prevent relative movement of the moveable connecting element (180) and the transmission element (161; 165) in at least one direction to allow transmission of the drive force, optionally wherein the interlocking keyed surfaces (165a; 183) prevent relative rotation of the moveable connecting element (180) and the transmission element (161; 165).

9. The pump of any preceding claim, wherein the moveable connecting element (180) comprises a connector interface (185) and one of the spaced apart transmission elements (161; 165) comprises a corresponding transmission interface (162a) for engaging the connector interface (185) to prevent relative movement of the moveable connecting element (180) and the transmission element (161; 165) in at least one direction to allow transmission of the drive force, optionally wherein relative rotation of the moveable connecting element (180) and the transmission element (161; 165) is prevented; and
wherein the interfaces (162a; 185) are connected in the first position and disconnected in the second position.

10. The pump of claim 9, wherein the moveable connecting element (180) comprises a cylindrical body (181) and the connector interface (185) comprises an array of radially extending teeth (185) provided around the circumference of the cylindrical body (181); and
wherein the transmission interface (162a) comprises a corresponding array of radially extending teeth (162a) adapted to engage the teeth (185) provided on the circumference of the cylindrical body (181).

11. The pump of any preceding claim, wherein the drivetrain assembly further comprises a drivetrain element (161) arranged between the drive source (155) and the impeller for transmitting the drive force.

12. The pump of claim 11, wherein the rotatable element (165) and the drivetrain element (161) are adjacent one another and form the spaced apart transmission elements (161; 165); and/or wherein the drivetrain element is a flywheel (161).

13. The pump of any preceding claim, wherein the pump (100) further comprises an endless flexible mechanical element (210; 210') received on the rotatable element (165) of the drivetrain assembly and the rotatable input element (205) of the ancillary device (200) so as to couple the rotatable elements (165; 205); and/or
wherein the ancillary device (200) is a priming assembly, the priming assembly (200) comprising a rotatably drivable air compressor (200).

14. The pump of any preceding claim, wherein the pump (100) further comprises a tensioning device (220) having a bearing portion (223), the bearing portion (223) being moveable relative to an axis extending between the rotatable input element (205) of the ancillary device (200) and the rotatable element (165) of the drivetrain assembly for applying tension to an endless flexible mechanical element (210; 210') received on the rotatable input element (205) and rotatable element (165).

15. A method of inserting or removing an endless flexible mechanical element from a pump for pumping fluid, the pump comprising:
a pump housing comprising a fluid inlet (111), a fluid outlet (112) and a pumping chamber fluidly connected to the fluid inlet (111) and the fluid outlet (112);
a rotatable impeller provided within the pumping chamber for drawing fluid from the fluid inlet (111) and displacing the fluid out of the fluid outlet (112);
a drive source (155) adapted to generate a drive force for rotating the impeller;
a drivetrain assembly coupling the drive source (155) to the impeller so as to transmit the drive force to the impeller, the drivetrain assembly comprising a rotatable element (165) arranged between the drive source (155) and the impeller so as to transmit the drive force; and
an ancillary device (200) comprising a rotatable input element (205),
wherein the rotatable element (165) of the drivetrain assembly is arranged such that it can be coupled to the rotatable input element (205) of the ancillary device (200) by an endless flexible mechanical element (210; 210') and thereby drive the rotatable input element (205) when coupled by an endless flexible mechanical element (210; 210');
wherein the drive source (155), the drivetrain assembly and the impeller define a plurality of transmission elements (155; 161; 165) and wherein a pair of the transmission elements (161; 165) are spaced apart, and
wherein the drivetrain assembly further comprises a moveable connecting element (180) for coupling the spaced apart transmission elements (161; 165), the moveable connecting element (180) being moveable between: a first position in which the spaced apart transmission elements (161; 165) are coupled so as to enable the drive force to be transmitted from the drive source (155) to the impeller; and a second position in which a gap is formed for allowing an endless flexible mechanical element (210; 210') to be threaded between the spaced apart transmission elements (161; 165) to allow the endless flexible mechanical element (210; 210') to couple the rotatable element (165) and the rotatable input element (205) of the ancillary device (200),
wherein the method comprises:
moving the moveable connecting element (180) from the first position to the second position to form a gap;
inserting a part of an endless flexible mechanical element (210; 210') through the gap;
connecting the endless flexible mechanical element (210; 210') to the rotatable element (165) and rotatable input element (205) so as to couple the rotatable elements (165; 205); and moving the moveable connecting element (180) from the second position to the first position.
